# EUROPEAN PATENT SPECIFICATION

(11) **EP 1 857 326 B1**
(45) Date of publication and mention of the grant of the patent: **01.10.2014**
(21) Application number: 07007878.7
(22) Date of filing: 18.04.2007
(51) Int. Cl.: B60R 16/02, B60R 21/26

(54) **Ignitor, inflator, and airbag apparatus**
Zünder, Gasgenerator und Airbagvorrichtung
Allumeur, gonfleur et appareil d'airbag

(30) Priority: 16.05.2006 JP 2006136633
(43) Date of publication of application: 21.11.2007
(73) Proprietor: TAKATA CORPORATION, Minato-ku, Tokyo 106-8510 (JP)
(72) Inventor: Takimoto, Takayuki, Tokyo 106-8510 (JP)
(74) Representative: Banzer, Hans-Jörg

(56) References cited:
- DE-A1- 10 053 363
- US-A- 5 794 971
- US-A1- 2002 116 795
- US-A1- 2005 082 801
- US-B1- 6 364 343
- US-B1- 6 705 671

## Description

The present invention relates to an initiator in which a harness for distributing power is connected to an initiator main body via a connecting portion such as an electrode, a connector, or the like, and to an inflator provided with the initiator, and more specifically, it relates to an initiator and an inflator, in which unreasonable force is hardly applied to the connecting portion of the initiator main body and the harness even when tensile force is exerted on the harness. Further, the present invention relates to an airbag apparatus provided with the inflator.

An airbag apparatus mounted on a motor vehicle or the like is provided with an airbag inflated by gas that is supplied into the inside of the same, and an inflator for supplying the gas into the airbag. The inflator is provided with gas-generating agent and an initiator for initiating a gas-generating reaction of the gas-generating agent.

The initiator is provided with reaction agent, an ignition device for starting reaction of the reaction agent, and a harness for distributing power to the ignition device.

By distributing the power to the ignition device via the harness, the reaction agent is ignited resulting in generating high-temperature reaction gas, and the gas-generating agent in the inflator starts the gas-generating reaction by the reaction gas. Thereby, a large amount of gas is generated from the inflator, and the airbag is inflated by the gas.

As a connecting structure for connecting the harness to an initiator main body, generally an electrode pin, which is conducted to the ignition device, is extended from the initiator main body, and the harness is connected to the electrode pin (refer to, for example, Japanese Unexamined Patent Application Publication No. 2002-90097). In this case, a connector is provided at a tip end of the harness, and the harness is connected to the electrode pin in a manner so as to insert the electrode pin into the connector.

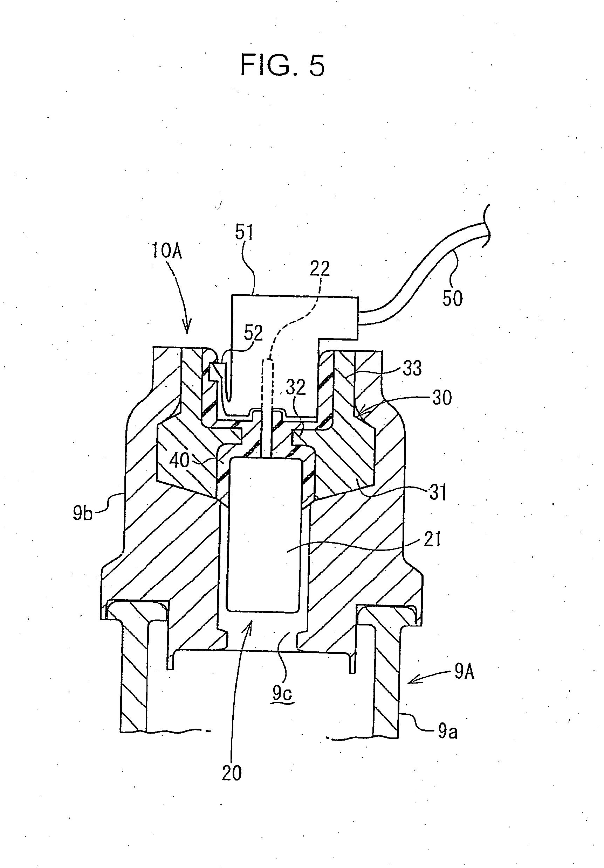

An example of such an initiator will be explained more in detail with reference to Fig. 5. Incidentally, Fig. 5 is a longitudinal cross-sectional view illustrating an initiator according to a hitherto known example and a vicinity of an initiator-attaching portion of the inflator provided with the initiator, in which a condition where the initiator is attached to the inflator, is shown.

An initiator 10A is provided with an initiator main body 20, an approximately cylindrically shaped collar 30 that holds the initiator main body 20, a resin 40 that joins the initiator main body 20 with the collar 30, a harness 50 that distributes the power to the initiator main body 20, and so forth.

The initiator main body 20 is provided with a head portion 21 housing the reaction agent and the ignition device (both of which are not shown) inside thereof, and an electrode pin 22 extending out from the head portion 21. The electrode pin 22 is conducted to the ignition device in the head portion 21.

The collar 30 is provided with a main body 31 having a cylindrical shape, an inwardly protruding flange portion 32 that is circumferentially formed on an inner peripheral surface of the main body 31, and a cylindrically shaped surrounding wall portion 33 extending from one end side (rear end side) of the main body 31. A diameter of an outer circumference of the main body 31 is formed to be greater than that of the surrounding wall portion 33.

The initiator main body 20 is disposed in the main body 31, and the electrode pin 22 extends in the surrounding wall portion 33, while passing through an inner hole of the inwardly protruding flange portion 32. The resin 40 is filled up in a space between the initiator main body 20 and the inner peripheral surface of the main body 31, and an inside of the inner hole of the inwardly protruding flange portion 32 by an injection molding process or the like. The resin 40 is then hardened, and the initiator main body 20 and the collar 30 are joined by the hardened resin 40.

A connector 51 is provided at a tip end of the harness 50, and the connector 51 is connected to the electrode pin 22 in a manner so as to insert a tip end side of the connector 51 into an inside of the surrounding wall portion 33. That is, in this hitherto known example, a connecting portion for connecting the initiator main body 20 and the harness 50 is constructed with the electrode pin 22 and the connector 51.

A numeral 52 denotes a claw for preventing the connector 51 from being pulled out, and the connector 51 is prevented from being pulled out from the electrode 22 in that the claw 52 is latched to a groove (numeral is omitted) formed in an inner peripheral surface of the surrounding wall portion 33.

The initiator 10A is attached to an inflator 9A.

In the hitherto known example, the inflator 9A is formed into a rod shape, and is provided with a cylindrically shaped housing 9a housing the gas-generating agent (not shown). At one end side (rear end side) of the housing 9a in a center axis direction, an initiator-attaching portion 9b is provided. The initiator-attaching portion 9b has approximately cylindrical shape having an inner hole 9c that is allowed to communicate with an internal space of the housing 9a. At the other end side (tip end side) of the housing 9a, a gas outlet (not shown) is provided.

The initiator 10A is inserted into the inner hole 9c of the initiator-attaching portion 9b, with the head portion 21 in the lead. In addition, a rear end side of the initiator-attaching portion 9b is crimped and is brought to be in close contact with an outer peripheral surface of the collar 30. Thereby, the initiator 10A is fixed in the initiator-attaching portion 9b and the rear end side of the initiator-attaching portion 9b is tightly sealed.

When the power is distributed to the ignition device via the harness 50, the connector 51 and the electrode pin 22, an operation of the ignition device is started resulting in igniting the reaction agent. Thus, a high-temperature reaction gas is generated. The reaction gas flows into the housing 9a passing through the inner hole 9c of the initiator-attaching portion 9b after rupturing the head portion 21. Thereby, the reaction gas is caused to be in contact with the gas-generating agent in the housing 9a, and the gas-generating reaction is started.

US 5,794,971 discloses a portable air bag having the features of the preamble of claim 1.

DE 100 53 363 A1 discloses a wire guiding structure in which wires attached to a battery connecting plate are bundled by a band made of synthetic resin.

An object of the present invention is to provide an initiator and an inflator provided with the initiator, and an airbag apparatus provided with the inflator, in which the harness for distributing power is connected to the initiator main body via a connecting portion such as an electrode, a connector or the like, and unreasonable force is hardly applied to the connecting portion of the initiator main body and the harness even when tensile force is applied to the harness.

According to the present invention, this object is achieved by an initiator as defined by claim 1 and an inflator as defined by claim 4. The dependent claims define preferred or advantageous embodiments.

In an initiator according to the invention, in which a harness for distributing power is connected to an initiator main body via a connecting portion, a hooking portion in which a halfway portion of the harness in an extending direction is hooked is provided on the initiator main body.

A cylindrically shaped cap is provided in a manner so as to surround the connecting portion, and the hooking portion is provided on the cap.

A sealing portion for covering the connecting portion may be provided.

In the initiator, the connecting portion may include an electrode provided in the initiator main body and a connector into which the harness continues, and the connector may be connected to the electrode, and the sealing portion may be provided in a manner so as to cover at least a space between the connector and the initiator main body.

An inflator according to an embodiment includes the initiator according to any one aspect or embodiment of the invention.

An airbag apparatus according to the invention is provided with an airbag and an inflator for inflating the airbag, the inflator being the inflator according to any one aspect or embodiment of the invention.

In an initiator and an inflator according to the present invention, since a halfway portion of a harness in an extending direction is hooked on an initiator main body by the hooking portion in the vicinity of a connecting portion of the harness and the initiator main body, the tensile force is hardly transmitted to the connecting portion even when tensile force is applied to the harness and thereby unreasonable force is hardly applied to the connecting portion.

By mounting the cap so as to surround the connecting portion of the initiator main body and the harness and by providing the hooking portion on the cap and hooking the harness thereon, a protecting effect for the connecting portion may be further improved.

When the connecting portion of the initiator main body and the harness for distributing power is sealed by means of the sealing portion, a waterproofing property of the connecting portion is good.

In a case in which the connecting portion includes the electrode provided in the initiator main body and the connector into which the harness continues, and in which the connecting portion has a structure where the connector is connected to the electrode, the waterproofing property becomes good by sealing at least a space between the initiator main body and the connector with the sealing portion.

In the inflator according to the present invention, since the halfway portion of the harness in the extending direction is hooked on the outer surface of the inflator by the hooking portion in the vicinity of the connecting portion of the harness and the initiator main body, the tensile force is hardly transmitted to the connecting portion and thereby an unreasonable force is hardly applied to the connecting portion even when tensile force is applied to the harness.

In the airbag apparatus according to the present invention, the hooking portion for the harness is provided in the initiator, and the harness is hooked on the hooking portion. Accordingly, an unreasonable force is hardly applied to the connecting portion of the harness and the initiator main body when the tensile force is applied to the harness, even though the hooking portion for the harness is not separately provided on, for example, a case or the like for housing the airbag apparatus. Further, the flexibility of the layout for the airbag apparatus for protecting a pedestrian is improved because there is no need to separately provide the hooking portion for the harness on the case for housing the airbag apparatus as described above.

Hereinbelow, an embodiment of the present invention will be explained with reference to the drawings.
Fig. 1 is a perspective view illustrating an initiator and a vicinity of an initiator-attaching portion of an inflator provided with the initiator, according to an embodiment;
Fig. 2 is a cross-sectional view along a line II-II of Fig. 1;
Fig. 3 is a perspective view illustrating an automobile, on which an airbag apparatus for protecting a pedestrian is mounted, according to the embodiment;
Fig. 4 is a plan view illustrating the airbag apparatus for protecting a pedestrian, in Fig. 3; and
Fig. 5 is a perspective view illustrating a hitherto known initiator and a vicinity of an initiator-attaching portion of an inflator provided with the initiator.

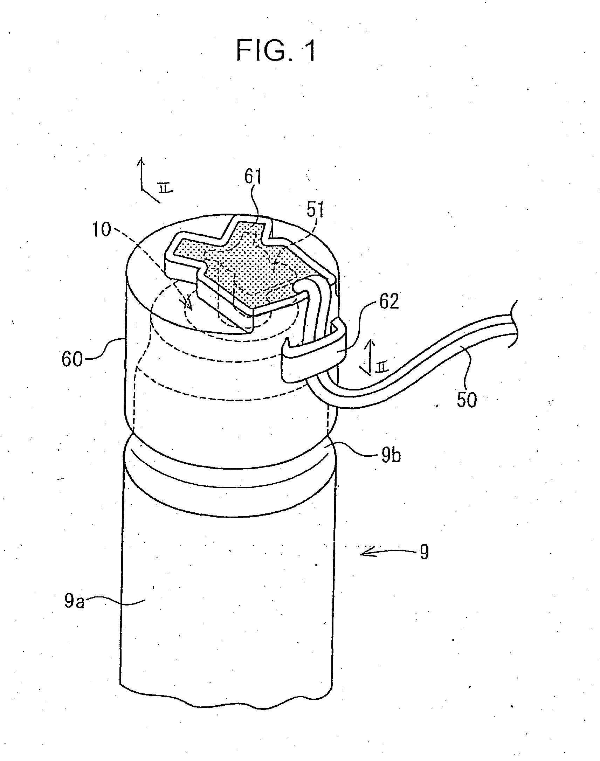

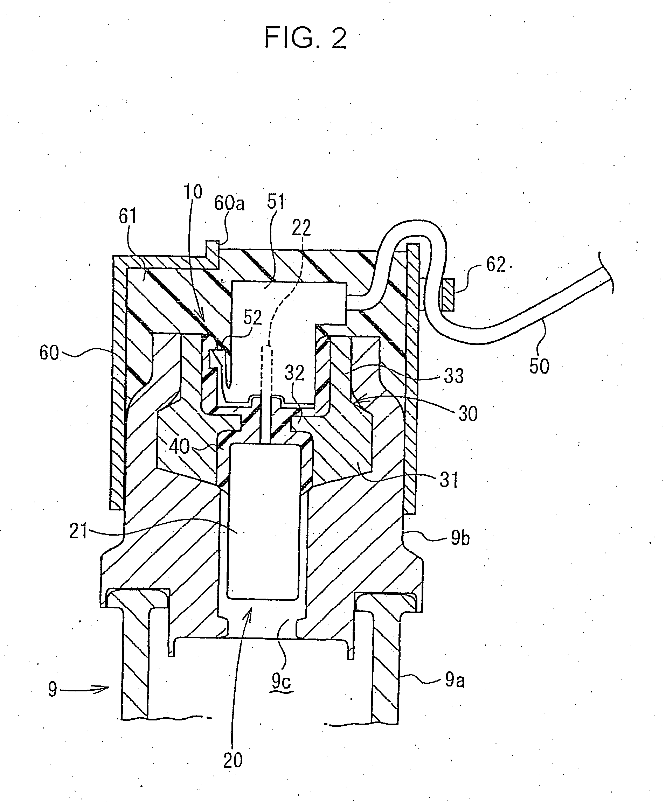

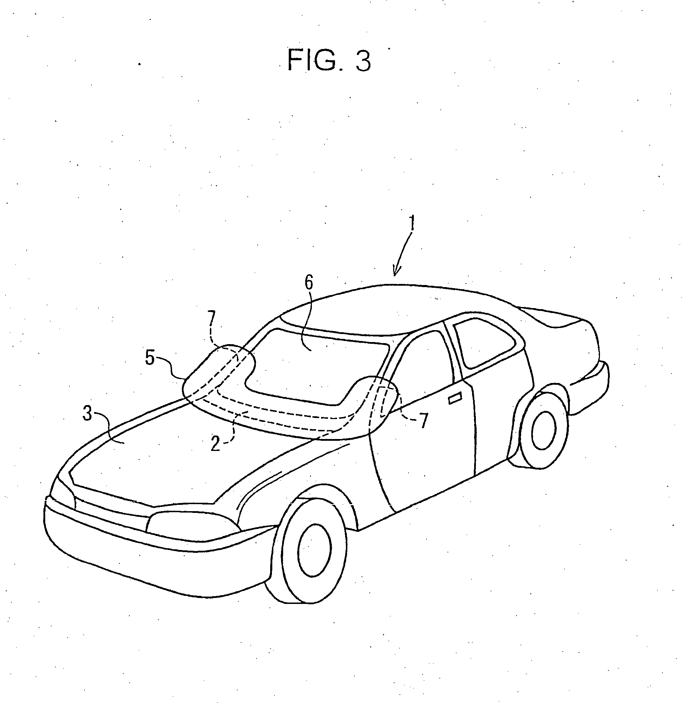

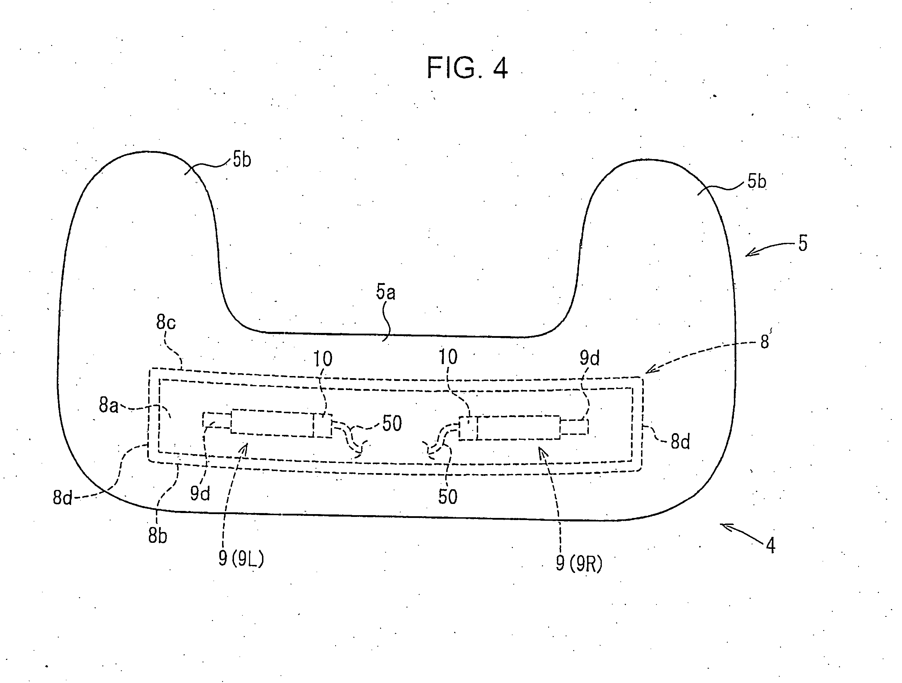

Incidentally, Figs. 1 and 2 illustrate a condition in which the initiator is attached to the inflator. In addition, Figs. 3 and 4 illustrate a condition in which the airbag is inflated.

In the explanation given below, a tip-and-rear direction corresponds to an upper and lower direction of Figs. 1 and 2, and an inflator side of the initiator, i.e., a lower side of the drawing is defined as a tip end, and a side opposite to the inflator side of the initiator, i.e., an upper side of the drawing is defined as a rear end.

Referring to Figs. 1 and 2, an initiator 10 according to this embodiment is provided with an initiator main body 20, an approximately cylindrically shaped collar 30 that holds the initiator main body 20, a resin 40 that joins the initiator main body 20 with the collar 30, a harness 50 that distributes power to the initiator main body 20, a hooking portion 62 for hooking a halfway portion of the harness 50, and so forth.

A construction of the initiator main body 20, the collar 30, the resin 40, the harness 50, and the connecting portion for connecting the initiator main body 20 and the harness 50, in the initiator 10 is identical of that of the initiator 10A in Fig. 5, described above.

Namely, in this embodiment, the initiator main body 20 includes the head portion 21 housing a reaction agent and an ignition device (both of which are not shown) inside thereof, and the electrode pin 22 that extends out from the head portion 21 and conducts to the ignition device in the head portion 21, as well. The initiator main body 20 is disposed in a main body 31 of the collar 30, and the electrode pin 22 extends out inside a surrounding wall portion 33 of a rear end side of the main body 31 while passing through an inner hole of an inwardly protruding flange portion 32 that is circumferentially formed in the main body 31. The resin 40 is filled up in a space between the initiator main body 20 and the inner peripheral surface of the main body 31, and inside the inner hole of the inwardly protruding flange portion 32 by an injection molding process or the like. The resin 40 is then hardened and the initiator main body 20 and the collar 30 are joined by the hardened resin 40.

Further, a connector 51 is provided at a tip end of the harness 50, and the connector 51 is connected to the electrode pin 22 in a manner so as to insert a tip end side of the connector 51 into an inside of the surrounding wall portion 33. That is, in this embodiment, a connecting member for connecting the initiator main body 20 and the harness 50 is constructed with the electrode pin 22 and the connector 51.

In this embodiment, the initiator 10 is also attached to the rod-shaped inflator 9. A construction of the inflator 9 is identical to the one of the inflator 9A, shown in Fig. 5, described above. Furthermore, an attaching structure of the initiator 10 to the inflator 9 is also identical of the attaching structure of the initiator 10A to the inflator 9A, shown in Fig. 5.

Namely, the inflator 9 also includes a cylindrically shaped housing 9a that houses a gas-generating agent (not shown), and the initiator-attaching portion 9b having approximately cylindrical shape and including an inner hole 9c that is allowed to communicate with an internal space of the housing 9a is provided at one end side (rear end side) of the housing 9a in a center axis direction. At the other end side (tip end side) of the housing 9a, a gas outlet 9d (shown in Fig. 4) is provided.

The initiator 10 is inserted into the inner hole 9c of the initiator-attaching portion 9b, with the head portion 21 in the lead. In addition, a rear end side of the initiator-attaching portion 9b is crimped and is brought to be in close contact with the outer peripheral surface of the collar 30. Thereby, the initiator 10 is fixed in the initiator-attaching portion 9b and the rear end side of the initiator-attaching portion 9b is tightly sealed.

In this embodiment, a cap 60 surrounding a joining body of the electrode pin 22 and the connector 51 is mounted at a rear end side of the initiator 10. A sealing portion 61, which covers the joining body of the electrode pin 22 and the connector 51, is formed by a potting material being filled up in the cap 60 from an opening 60a at an upper surface of the cap 60.

Incidentally, as shown in Fig. 2, in this embodiment, a tip end side of the cap 60 is fitted to the outer side of the initiator-attaching portion 9b, and the potting material is also filled up in a space between an inner peripheral surface of the cap 60 and an outer peripheral surface of the initiator-attaching portion 9b, and the space between both is sealed with the sealing portion 61. Further, the potting material is also filled in a space between an inner peripheral surface of the surrounding wall portion 33 and the connector 51.

In this embodiment, the entire connector 51 is buried in the sealing portion 61, and the harness 50 continuing into the connector 51 is pulled out of the cap 60 from an inside of the sealing portion 61 passing through the opening 60a.

However, in the present invention, when at least a space between the connector 51 and the initiator main body 20 (a space between the connector 51 and the inner surface of the surrounding wall portion 33 in this embodiment), and preferably, a joining portion of the connector 51 and the harness 50 (a base portion of the harness 50 to the connector 51) further are covered with the sealing portion 61, a waterproofing property is sufficiently secured, and therefore there is no need for the entire connector 51 to be buried in the sealing portion 61.

Incidentally, with regard to the potting material, although urethane resin or the like is listed, the potting material is not limited thereto. Further, with regard to a material of the cap 60, a PBT (polybutylene terephthalate) or the like is listed because of good joining characteristic with the potting material. However, the material of the cap 60 is not limited thereto. In the present invention, the sealing portion 61 may be formed from a sealing means other than the potting material.

As shown in Fig. 1, in this embodiment, a hook-shaped hooking portion 62 is provided on an outer peripheral surface of the cap 60. The halfway portion of the harness 50 that is pulled out of the cap 60 is hooked on the hooking portion 62. Although the hooking portion 62 is integrally provided with the cap 60 in this embodiment, the same may be provided as a separate body from the cap 60 in alternative implementations. Further, the hooking portion 62 is not limited to that having the hook-like shape and various constructions can be adopted therefore.

Other construction of the initiator 10 and the inflator 9 provided with the initiator 10 is identical to that to the initiator 10A and the inflator 9A, shown in Fig. 5, described earlier, and an explanation therefore is omitted by using the same numerals as that in Fig. 5 for the same elements in Figs. 1 and 2.

When the power is distributed to the ignition device via the harness 50, the connector 51 and the electrode pin 22, an operation of the ignition device is started resulting in igniting the reaction agent, and thus, a high-temperature reaction gas is generated. The reaction gas flows into the housing 9a passing through the inner hole 9c of the initiator-attaching portion 9b after rupturing the head portion 21. The reaction gas is caused to be in contact with the gas-generating agent in the housing 9a, and the gas-generating reaction is started. Further, the gas generated by the gas generating reaction is blown out from the gas outlet 9d at the tip end side of the inflator 9. Hereinbelow, an operation from a starting motion of the power distribution to the initiator 10 (ignition device) to a blowing-out motion of the gas from the gas outlet 9d is called as gas blowing-out operation of the inflator 9.

In the initiator 10 and the inflator 9, since the halfway portion of the harness 50 is hooked by the hooking portion 62 to the cap 60 surrounding the joining body of the electrode 22 and the connector 51 tensile force is hardly transmitted to the connector 51 and thereby unreasonable force is hardly applied to the joining body of the electrode pin 22 and the connector 51 even when the tensile force is exerted on the harness 50.

In this embodiment, since the joining body of the electrode pin 22 and the connector 51 is covered with the sealing portion 61, the good waterproofing property can be obtained in between the electrode pin 22 and the connector 51.

In this embodiment, the cylindrically shaped cap 60 is provided in a manner so as to surround the joining body of the electrode pin 22 and the connector 51, and the sealing portion 61 for covering the joining body of the connector 51 and the electrode pin 22 is formed by filling up the potting material inside the cap 60. Accordingly, a highly effective waterproof treatment can easily be performed.

In this embodiment, the hooking portion 62 is provided on the outer peripheral surface of the cap 60, and the harness 50 is hooked on the outer peripheral surface of the cap 60 by means of the hooking portion 62 in close proximity to a portion where the harness 50 extends out from the sealing portion 61. Accordingly, even when the tensile force is applied to the harness 50, the tensile force is hardly transmitted to a portion in the harness 50 that extends inside the cap 60 and the harness 50 can be prevented from being peeled off from the sealing portion 61 that covers this portion, or the sealing portion 61 can also be prevented from being ruptured by the tensile force.

In this embodiment, the inflator 9 is mounted on an airbag apparatus 4 for protecting a pedestrian.

As shown in Fig. 3, in this embodiment, an automobile 1, on which the airbag apparatus 4 for protecting a pedestrian is mounted, is a four-door sedan. However, the present invention is not limited to a specific motor vehicle configuration. The airbag apparatus 4 is installed at a rear part of a hood 3. As shown in the drawing, when the airbag 5 of the airbag apparatus 4 for protecting a pedestrian is inflated, at least a part of a rear edge portion of the hood 3, a cowl louver 2, a windshield 6 and left and right A-pillars 7 are covered with the airbag 5.

Incidentally, the airbag 5 is formed into approximately U-shape and is provided with a cowl-covering portion 5a which covers the cowl louver 2 and a lower part of the windshield 6, and pillar covering portions 5b which continue into both left and right end sides of the cowl-covering portion 5a and cover at least a lower end side of the left and right A-pillars 7 while developing along each of the A-pillars 7. However, a developing shape of the airbag is not limited to the above-described. For example, the airbag 5 may have approximately rectangular shape covering approximately entire body over the cowl louver 2, the windshield 6 and the A-pillars 7. Alternatively, the airbag 5 may have approximately H-shape or the like including a pair of fender-covering portions extending frontward in a manner so as to cover over the left and right end sides of the cowl-covering portion 5a and left and right fender portions.

The airbag apparatus 4 for protecting a pedestrian is provided with a case 8 for housing a folded airbag 5, the inflator 9 (9L and 9R) for inflating the airbag 5, a lid (not shown) that closes an airbag passing-through opening (not shown) in the hood 3 for allowing the airbag 5 to pass therethrough, or the like.

The case 8 has a long box shape extending in a vehicle body width direction. The case 8 is provided with a bottom portion 8a, a front wall portion 8b, a rear wall portion 8c and left and right end walls 8d and 8d, and a top surface thereof is open. The case 8 is disposed at a backside of the hood 3 so that a top surface opening portion thereof faces the airbag passing-through opening, and is attached to the hood 3 via a bracket (not shown).

In this case 8, the folded body of the airbag 5 is disposed from one end side to the other end side of the case 8 in a longitudinal direction.

In this embodiment, as shown in Fig. 4, inflators 9 (9L and 9R) are installed at both end sides of the case 8 in a longitudinal direction, respectively. The inflator 9L positioned at a left end side of the case 8 is arranged at a left half side of the cowl-covering portion 5 a of the airbag 5, and the inflator 9R positioned at a right end side of the case 8 is arranged at a right half side of the cowl-covering portion 5a. As shown in the drawing, a longitudinal direction of each of the inflators 9L and 9R conforms to the longitudinal direction of the case 8, and each of the inflators 9L and 9R is disposed in a manner such that each of tip end (gas outlet 9d) sides thereof faces both end sides of the case 8 in the longitudinal direction.

However, the arrangement of the inflator 9 is not limited to the above-described.

The harness 50 extending out from the initiator 10 of each of the inflators 9 is pulled out from the airbag 5, respectively, and is connected to a control circuit (not shown) of the airbag apparatus 4 for protecting a pedestrian.

Although not shown, in the automobile 1 on which the airbag apparatus 4 for protecting a pedestrian is mounted, various sensors are provided for detecting that the automobile 1 has collided against a pedestrian or the like, or for predicting that the automobile 1 will collide against the pedestrian or the like. (Incidentally, both the detecting sensor and the predicting sensor may also be provided.) The control circuit distributes power to the initiator 10 (the above-described ignition device) of each of the inflators 9 via the harness 50, on the basis of a detecting signal or a predicting signal from these sensors.

Operation of the airbag apparatus 4 for protecting a pedestrian having such a construction is as follows.

In a case that a collision of the automobile 1 against the pedestrian or the like is detected by the sensor, or in a case that the collision of the automobile 1 against the pedestrian or the like is predicted by the sensor, the power is distributed to the initiator 10 (ignition device) of each of the inflators 9 from the control circuit via the harness 50, on the basis of the detecting signal or the predicting signal. Thereby, each of the inflators 9 starts a gas-blowing-out operation as described above, and the airbag 5 starts to be inflated by the gas from each of the inflators 9. The airbag 5 pushes open the above-described lid and is developed along an outer surface of the vehicle body, as shown in Fig. 3.

In the airbag apparatus 4 for protecting a pedestrian, since the halfway portion in an extending direction of the harness 50 continuing into the initiator 10 is hooked on the cap 60 attached to the inflator 9 by the hooking portion 62, the unreasonable force is hardly applied to the joining body of the electrode pin 22 and the connector 51 when the tensile force is exerted on the harness 50, even though a hooking portion for hooking the harness 50 is not provided on, for example, the case 8 or the like. Further, since there is no need to provide the hooking portion for the harness 50 on the case 8 or the like, high flexibility of a layout can be obtained for the airbag apparatus 4 for protecting a pedestrian.

Although the airbag apparatus 4 for protecting a pedestrian is installed outside a vehicle interior, the joining body of the electrode pin 22 and the harness 51 is covered with the sealing portion 61 in the initiator 10 of the inflator 9 mounted on the airbag apparatus 4 for protecting a pedestrian in this embodiment, and thus, an intrusion of rain water or the like into a space between the same is prevented and thereby weatherability of the initiator 10 is high.

The aforementioned embodiment describes an example of the present invention, and the present invention is not limited to the aforementioned embodiment.

In the aforementioned embodiment, although the hooking portion 62 for the harness 50 is provided on the outer peripheral surface of the cap 60 surrounding the electrode pin 22 and the connector 51, in a background example the hooking portion 62 for the harness 50 may be provided on a top portion, an inner peripheral portion, or the like of the cap 60. Further, in a background example the hooking portion 62 for the harness 50 may be provided at a place of the initiator 10 or the inflator 9 other than the above-described (for example, at the collar 30 of the initiator 10, the initiator-attaching portion 9b of the inflator 9, or the like). The hooking portion 62 for the harness 50 may be provided at a plurality of places.

In the aforementioned embodiment, although the sealing portion 61 is formed in a manner so as to fill up in the cap 60 with the potting material, a method for forming the sealing portion 61 is not limited thereto. For example, the sealing portion 61 may be formed only at an important part, by directly applying a sealing material to at least the space between the connector 51 and the surrounding wall portion 33, preferably, to the joining portion of the harness 50 and the connector 51 further, or like manner.

However, in the present invention, the sealing portion 61 may be omitted.

A construction of a detail of the initiator 10 (the initiator main body 20, a shape of the collar 30, a holding structure therefore, or the like) may be a construction other than that illustrated in the drawings.

An attaching structure of the initiator 10 to the inflator 9 may be a construction other than that illustrated in the drawings.

A construction of the inflator 9 is also not limited to that illustrated above. For example, the inflator 9 may not have a rod shape but a disk shape, or the like.

In the aforementioned embodiment, although the cap 60 also covers the initiator-attaching portion 9b of the inflator 9, the cap 60 may have a construction that covers only the joining body of the electrode pin 22 and the connector 51. In a background example, the cap 60 may be omitted.

In the aforementioned embodiment, although the airbag apparatus is the airbag apparatus for protecting a pedestrian, the present invention is not limited thereto and can be applied to various airbag apparatuses, such as an airbag apparatus for protecting an occupant that is installed in the vehicle interior, or the like.

## Claims

1. An initiator wherein a harness (50) for distributing power is connected to an initiator main body (20) via a connecting portion (22, 51), **characterized by**
a hooking portion (62) wherein a halfway portion of the harness (50) in an extending direction is hooked on the initiator main body (20),
wherein a cylindrically shaped cap (60) is provided in a manner so as to surround the connecting portion (22, 51), and the hooking portion (62) is provided on the cap (60),
wherein the hooking portion (62) is integrally formed with the cap (60), and said halfway portion of said harness (50) is at least partially interposed between said hooking portion (62) and said cap (60),
wherein the hooking portion (62) is provided on an outer peripheral side of the cap (60).

2. The initiator according to Claim 1, wherein a sealing portion (61) for covering the connecting portion (22, 51) is provided.

3. The initiator according to Claim 2, wherein the connecting portion includes an electrode (22) provided in the initiator main body (20) and a connector (51) into which the harness (50) continues, and wherein the connector (51) is connected to the electrode (22), and wherein the sealing portion (61) is provided in a manner so as to cover at least a space between the connector (51) and the initiator main body (20).

4. An inflator comprising the initiator (10) according to any one of Claims 1 through 3.

5. An airbag apparatus comprising an airbag (5) and an inflator (9) for inflating the airbag (5), wherein the inflator (9) is the inflator according to Claim 4.

## Patentansprüche

1. Zünder, wobei ein Kabelstrang (50) zum Verteilen von Energie über einen Verbindungsabschnitt (22, 51) mit einem Zünderhauptkörper (20) verbunden ist, **gekennzeichnet durch**
einen Einhakungsabschnitt (62), an dem ein in Längsrichtung mittlerer Abschnitt des Kabelstrangs (50) in den Zünderhauptkörper (20) eingehakt ist,
wobei eine zylinderförmige Kappe (60) derart vorgesehen ist, dass sie den Verbindungsabschnitt (22, 51) umgibt, und wobei der Einhakungsabschnitt (62) auf der Kappe (60) vorgesehen ist,
wobei der Einhakungsabschnitt (62) einstückig mit der Kappe (60) ausgebildet ist und der mittlere Abschnitt des Kabelstrangs (50) wenigstens teilweise zwischen dem Einhakungsabschnitt (62) und der Kappe (60) angeordnet ist,
wobei der Einhakungsabschnitt (62) an einer äußeren Umfangsseite der Kappe (60) vorgesehen ist.

2. Zünder nach Anspruch 1, wobei ein Dichtungsabschnitt (61) zum Bedecken des Verbindungsabschnitts (22, 51) vorgesehen ist.

3. Zünder nach Anspruch 2, wobei der Verbindungsabschnitt eine in dem Zünderhauptkörper (20) vorgesehene Elektrode (22) und einen Verbinder (51), in welchen sich der Kabelstrang (50) hinein erstreckt, aufweist, und wobei der Verbinder (51) mit der Elektrode (22) verbunden ist, und wobei der Dichtungsabschnitt (61) derart vorgesehen ist, dass er wenigstens einen Zwischenraum zwischen dem Verbinder (51) und dem Zünderhauptkörper (20) bedeckt.

4. Aufblaseinrichtung umfassend den Zünder (10) nach einem der Ansprüche 1-3.

5. Airbagvorrichtung umfassend einen Airbag (5) und eine Aufblaseinrichtung (9) zum Aufblasen des Airbags (5), wobei die Aufblaseinrichtung (9) die Aufblaseinrichtung nach Anspruch 4 ist.

## Revendications

1. Déclencheur dans lequel un faisceau de câbles (50) pour distribuer du courant est raccordé à un corps principal de déclencheur (20) via une partie de raccordement (22, 51), **caractérisé par** :
une partie d'accrochage (62) dans laquelle une partie centrale du faisceau de câble (50) dans une direction d'extension, est accrochée sur le corps principal de déclencheur (20),
dans lequel un capuchon de forme cylindrique (60) est prévu afin d'entourer la partie de raccordement (22, 51) et la partie d'accrochage (62) est prévue sur le capuchon (60),
dans lequel la partie d'accrochage (62) est formée de manière solidaire avec le capuchon (60) et ladite partie centrale dudit faisceau de câbles (50) est au moins partiellement intercalée entre ladite partie d'accrochage (62) et ledit capuchon (60),
dans lequel la partie d'accrochage (62) est prévue sur un côté périphérique externe du capuchon (60).

2. Déclencheur selon la revendication 1, dans lequel est prévue une partie d'étanchéité (61) pour recouvrir la partie de raccordement (22, 51).

3. Déclencheur selon la revendication 2, dans lequel la partie de raccordement comprend un électrode (22) prévue dans le corps principal de déclencheur (20) et un connecteur (51) dans lequel le faisceau de câbles (50) continue, et dans lequel le connecteur (51) est raccordé à l'électrode (22), et dans lequel la partie d'étanchéité (61) est prévue afin de recouvrir au moins un espace entre le connecteur (51) et le corps principal de déclencheur (20).

4. Gonfleur comprenant le déclencheur (10) selon l'une quelconque des revendications 1 à 3.

5. Appareil de coussin de sécurité gonflable comprenant un coussin de sécurité gonflable (5) et un gonfleur (9) pour gonfler le coussin de sécurité gonflable (5), dans lequel le gonfleur (9) est le gonfleur selon la revendication 4.
